# NEUE EUROPÄISCHE PATENTSCHRIFT

(11) **EP 3 059 086 B2**
(45) Veröffentlichungstag und Bekanntmachung des Hinweises auf die Entscheidung über den Einspruch: **27.01.2021**
(45) Hinweis auf die Patenterteilung: 12.04.2017
(21) Anmeldenummer: 15000510.6
(22) Anmeldetag: 23.02.2015
(51) Int. Cl.: B41F 35/00, B01D 33/04

(54) **DRUCKMASCHINEN-FILTRATIONSANORDNUNG**
PRESSURE MACHINES FILTRATION ASSEMBLY
SYSTÈME DE FILTRATION DE PRESSES

(43) Veröffentlichungstag der Anmeldung: 24.08.2016
(73) Patentinhaber: Kraft-Schlötels GmbH, 41849 Wassenberg (DE)
(72) Erfinder: Dittmann, Ralph, Dr., 45134 Essen (DE); Moers, Dirk, 41849 Wassenberg (DE)
(74) Vertreter: Cohausz Hannig Borkowski Wißgott

(56) Entgegenhaltungen:
- EP-A2- 1 862 310
- EP-B1- 1 342 574
- DE-A1- 10 320 532
- DE-A1-102007 033 293
- DE-T5-112010 004 352

## Beschreibung

Die Erfindung betrifft eine Druckmaschinen-Filtrationsanordnung gemäss dem Oberbegriff von Anspruch 1. Eine solche Vorrichtung ist aus einer Vorbenutzung bekannt. Die Erfindung betrifft weiterhin auch ein Verfahren zum Betrieb einer Druckmaschinen-Filtrationsanordnung.

Im Stand der Technik ist es bekannt, dass Druckmaschinen, insbesondere Rollen-Offset-Druckmaschinen mit einem Prozesswasser betrieben werden, das oftmals auch als "Feuchtwasser" bezeichnet wird, wobei das Prozesswasser während des Betriebes einer Druckmaschine einer Verschmutzung unterliegt, zum Beispiel durch partikularen Schmutz, der hauptsächlich durch Papier und Farbe verursacht wird oder auch Öle, die hauptsächlich durch Farbe verursacht werden.

Um das Prozesswasser im Kreislauf betreiben zu können sieht es der Stand der Technik vor, das Prozesswasser durch eine Druckmaschinen-Filtrationsanordnung zu führen, durch insbesondere mehrfache Filtration zu reinigen und zu der Druckmaschine zurückzuführen, wo es im Betrieb erneut verschmutzt.

Das übliche Vorgehen ist dabei derart, dass das bei der Druckmaschine generierte verschmutzte Prozesswasser mittels Pumpen insbesondere mehreren Filtern und/oder Filterbeuteln zugeführt wird und unter aktiv generiertem Druck durch die Filter geleitet wird, die sich durch die rückgehaltenen partikulären oder auch flüssigen Schmutzstoffe zusetzen und in regelmäßigen Abständen von ggfs. nur wenigen Stunden ersetzt werden müssen. Bei nicht ausreichender Filterleistung wird das Prozesswasser noch zusätzlich weiteren Reinigungsstufen zugeführt. Hier kommen Reinigungsanlagen mit weiteren Filtern oder auch Reinigungsanlagen, die mit der Zentrifugalkraft arbeiten, zum Einsatz. Solche Reinigungsanlagen sind jedoch sehr aufwändig, kostenintensiv zu betreiben und haben nur einen geringen Durchsatz.

Dokument DE-A-103 20 532 offenbart eine Anordnung gemäss dem Oberbegriff von Anspruch 1 mit der Ausnahme eines berührungslosen Sensors.

Im Stand der Technik besteht die Notwendigkeit, am Ort des Einsatzes der Druckmaschinen-Filtrationsanordnung austauschbare Filtereinheiten vorzuhalten und diese durch Wartungspersonal zu wechseln. Ein weiterer Nachteil des bisherigen Vorgehens ist darin zu sehen, dass während des Wechselns des Filtermaterials die Filtrationswirkung nicht gegeben ist und in dieser Zeit das Prozesswasser nicht gefiltert wird. Ein weiterer Nachteil des bisherigen Vorgehens ist darin zu sehen, dass durch das Verschmutzen der Filter sich die Filterwirkung kontinuierlich verändert und daher das Prozesswasser einer kontinuierlichen Veränderung unterliegt. Ein weiterer Nachteil des bisherigen Vorgehens ist darin zu sehen, dass durch das aktive Pumpen des Prozesswassers von einer Druckmaschine zu der Druckmaschinen-Filtrationsanordnung der im Prozesswasser enthaltene Schmutz, sowie gegebenenfalls auch Luftblasen fein dispergiert wird und deswegen im Anschluss in der Druckmaschinen-Filtrationsanordnung schwieriger zu entfernen ist.

Vor diesem Hintergrund ist es eine Aufgabe der Erfindung, eine Druckmaschinen-Filtrationsanordnung, sowie ein Verfahren zum Betrieb einer solchen bereitzustellen, mittels denen eine größere Filtrationseffektivität erzielt wird, weniger Wartungspersonal benötigt ist, eine gleichbleibende Filterwirkung und gleichbleibende Prozesswasserqualität erreicht wird und sich bevorzugt auch Wartungsintervalle verlängern und Filtermengen und Abfälle reduzieren.

Diese Aufgabe wird mit einer Druckmaschinen-Filtrationsanordnung nach Anspruch 1 gelöst.

Weiterhin wird diese Aufgabe durch ein Verfahren nach Anspruch 6 gelöst.

Ein wesentlicher Kerngedanke der Erfindung beruht darauf, eine Vliesfilterbahn von einem Vorrat, insbesondere von einer Vorratsrolle automatisiert zu entnehmen, durch das Filterbecken zu führen, wo die Vliesfilterbahn ihre Filterfunktion ausübt und bei Verschmutzung ebenso automatisiert einem Auffangbereich zuzuführen. Hierbei ist es gemäß der Erfindung vorgesehen, dass alleinig nur durch die Vliesfilterbahn, gegebenenfalls abgesehen von einem Notüberlauf, der Übergangsbereich gebildet ist zwischen dem genannten Wassereinlaufbereich und einem darunterliegenden Wasserauslaufbereich, sodass das Prozesswasser, welches in das Filterbecken einströmt, zwingend die Vliesfilterbahn passieren muss.

Hierbei sieht sowohl die Anordnung als auch das Verfahren vor, dass entgegen den bisherigen Maßnahmen im Stand der Technik, gemäß denen das Prozesswasser aktiv durch Pumpen mit einem Druck beaufschlagt wird, keine aktive Druckerzeugung in der Filtrationsanordnung vorgesehen wird, um das Prozesswasser zu filtern, sondern das Prozesswasser wird ausschließlich durch den statischen Druck des über der Vliesfilterbahn aufstehenden Prozesswassers, der passiv durch die Gewichtskraft des Wassers erzeugt ist, durch die Vliesfilterbahn hindurch transportiert. Das Filterbecken, dessen Ein- und Ausläufe und die aktive Filterfläche im Filterbecken sind dabei bevorzugt so dimensioniert, dass das gesamte pro Zeiteinheit anfallende Prozesswasser gefiltert werden kann, insbesondere also ohne die Filtrationsanordnung mit einer Teilwassermenge und einem Bypass für die Restwassermenge zu betreiben.

Durch das auf der Vliesfilterbahn aufstehende Prozesswasser wird bewirkt, dass die durchfeuchtete Vliesfilterbahn durch die Gewichtskraft der Prozess Wassersäule in Richtung auf das unter der Vliesfilterbahn angeordnete Förderband kraftbeaufschlagt ist, sodass zwischen der Unterseite der Vliesfilterbahn und der Oberfläche des Förderbandes ein Kraft-und/oder Reibschluss entsteht, der dazu führt, dass bei einem motorischen Transport des Förderbandes in eine vorgegebene Richtung die Vliesfilterbahn in derselben Richtung mit gefördert wird. Es bedarf somit keiner mechanischen Eingriffsmittel zwischen Förderband und Vliesfilterbahn, was die Filtrationsanlage mechanisch vereinfacht.

Die Vliesfilterbahn wird bevorzugt in Richtung seiner Längserstreckung über einen oberen Randbereich des Filterbeckens, der z.B. durch eine Umlenkwalze gebildet sein kann, in dieses hineingeführt, der Oberfläche des Förderbandes folgend durch das Filterbecken hindurchgeführt und auf gegenüberliegender Seite über einen oberen Randbereich des Filterbeckens, der wiederum durch eine Umlenkwalze gebildet sein kann, aus diesem herausgeführt. Zwischen diesen Randbereichen ist somit das Prozesswasser von der Vliesfilterbahn umschlossen.

Um zu verhindern, dass Wasser an den Längsseiten der Vliesfilterbahn ungefiltert vorbeiströmt kann es vorgesehen sein, diesen Seitenbereich zwischen der Vliesfilterbahn und dem Filterbecken abzudichten, z.B. dadurch, dass von der Seitenwand des Filterbeckens der Oberfläche des Förderbandes folgend in das Filterbecken ein wasserundurchlässiges Auflageelement, insbesondere streifenförmiges Auflageelement vorspringt, auf dem ein seitlicher Randbereich der Vliesfilterbahn aufliegt. Dieses Auflageelement kann zwischen der Oberfläche des Förderbandes und der Unterfläche der Vliesfilterbahn angeordnet sein.

Die Erfindung sieht hier weiterhin vor, dass das Förderband in Abhängigkeit der Höhe der oberhalb der Vliesfilterbahn aufstehenden Prozesswassersäule angetrieben ist, was durch eine Regelung realisiert ist.

Dem liegt die Überlegung zugrunde, dass mit einem fortschreitenden Zusetzen der Vliesfilterbahn durch den mit dem Prozesswasser mitgeführten Schmutz dem Prozesswasser beim Durchtritt durch die Vliesfilterbahn ein sich zunehmend erhöhender Widerstand entgegengesetzt wird, der die Prozesswassersäule ansteigen lässt.

Dieses Ansteigen, bzw. allgemein die Höhe der Prozesswassersäule wird erfindungsgemäß detektiert und das Förderband in Abhängigkeit hiervon betrieben, z.B. bei Überschreiten einer festgelegten Wassersäulenhöhe der Antrieb des Förderbandes angesteuert, bevorzugt um das Förderband eine vorbestimmte Weglänge weiter zu transportieren, so dass ein Teilbereich der verschmutzten Vliesfilterbahn aus dem Filterbecken heraus transportiert wird und ein Teilbereich von neuer, nicht verschmutzter Vliesfilterbahn in das Filterbecken hinein transportiert wird, so dass sich hierdurch die Höhe der Prozesswassersäule wieder reduziert. Eine Regelung kann hier beispielsweise vorsehen, dass die Höhe der Prozesswassersäule zwischen einem minimalen Höhenwert und einem maximalen Höhenwert schwankt.

Auf diese Art und Weise kann eine besonders gute Tiefenfiltration mittels einer solchen Vliesfilterbahn erzielt werden, sowie eine hohe Wartungsfreiheit bzw. gegenüber dem Stand der Technik deutlich verlängerte Wartungsintervalle, da automatisiert in Abhängigkeit der Prozesswassersäulenhöhe im Filterbecken der Vorschub der Vliesfilterbahn erfolgt, bis dass der Vorrat, insbesondere eine Vorratsrolle aufgebraucht ist und erst hiernach durch Wartungspersonal eine neue Vorratsrolle in der erfindungsgemäßen Filtrationsanordnung zum Einsatz kommen muss.

Besonders auch dadurch, dass die Filtration ausschließlich durch den statischen Druck der auf der Vliesfilterbahn aufstehenden Wassersäule erfolgt kommt es im Filterbecken zu einer Beruhigung des Prozesswassers, sodass im Prozesswasser vorhandene partikulare oder flüssige Schmutzstoffe keiner weiteren Zerkleinerung unterliegen, wie dies bei einem dynamischen Druckaufbau oder Förderung mittels Pumpen der Fall wäre.

Gemäss der Erfindung ist es vorgesehen, dass die Druckmaschinen-Filtrationsanordnung unterhalb des Höhenniveaus des Prozesswasserauslaufes einer Druckmaschine angeordnet ist und das Prozesswasser von der Druckmaschine mittels einer Prozesswasser-Zufuhrleitung dem Filterbecken alleine durch Schwerkraftwirkung zugeführt ist.

Gegenüber dem Stand der Technik kommt demnach für die Förderung des Prozesswassers von einer Druckmaschine zu der Filtrationsanordnung bevorzugt jegliche Pumpe in Entfall, sodass auch auf diesem Transportweg keine weitere Zerkleinerung von Schmutz stattfindet.

Insbesondere das als nachteilig zum Stand der Technik beschriebene Dispergieren von Schmutz und oder Luft im Prozesswasser, welches durch die Förderung mittels eines Pumpenlaufrades erfolgt, kann somit gemäß der Erfindung vollständig vermieden werden.

Um weiterhin zu einer Beruhigung des Prozesswassers beim Einlaufen in die Filtrationsanordnung beizutragen kann die Erfindung auch vorsehen, dass eine von der Druckmaschine kommende Prozesswasser-Zufuhrleitung unterhalb des in dem Filterbecken vorliegenden Prozesswasserspiegels in den Wassereinlaufbereich des Filterbeckens mündet. So werden jegliche Oberflächenbewegungen des Prozesswassers und ein durch das Einfließen sonst verursachter Lufteintrag im Wassereinlaufbereich vermieden oder zumindest reduziert und auch hierdurch die Filtrationseffektivität gesteigert.

Die Erfindung kann es weiterhin vorsehen, in Abhängigkeit eines benötigten Prozesswasser-Volumenstromes den Querschnitt der Prozesswasser-Zufuhrleitung derart zu dimensionieren, dass durch die dann gegebene Fließgeschwindigkeit bei dem benötigten Volumenstrom sichergestellt wird, dass Ablagerungen von Schmutz aus dem Prozesswasser nicht bereits in der Prozesswasser-Zufuhrleitungen vorkommen, sondern der Schmutz sicher in der Schwebe gehalten und zum Filterbecken transportiert wird. Beispielsweise kann es vorgesehen sein, eine Mindestfließgeschwindigkeit von 1 Meter pro Sekunde vorzusehen.

Die Querschnittdimensionierung kann weiterhin derart erfolgen, dass eine einzuhaltende Höchstfließgeschwindigkeit von beispielsweise 2 Meter pro Sekunde weiterhin auch nicht überschritten wird, um sicherzustellen, dass keine unnötigen Turbulenzen entstehen, die zu einer Zerkleinerung oder zu einem Dispergieren von Schmutzpartikeln und/oder Luft oder flüssigen Schmutzbestandteilen beitragen. So wird in einem bevorzugten Fließgeschwindigkeitsintervall zwischen den zuvor genannten Werten ein optimaler Prozesswassertransport sichergestellt.

Unabhängig von den beiden vorgenannten Aspekten, insbesondere aber in Kombination hiermit kann die Erfindung vorsehen, dass der Mündungsquerschnitt der Prozesswasser-Zufuhrleitung am Ort des Wassereinlaufbereiches vergrößert ist gegenüber dem Querschnitt der Prozesswasser-Zufuhrleitung in Strömungsrichtung davor.

Eine solche Vergrößerung kann beispielsweise mindestens um den Faktor 2 gegeben sein, z.B. durch Aufspaltung einer Leitung in zwei oder mehr Leitungen desselben Querschnittes wie die noch nicht aufgespaltene Leitung.

Die Erfindung kann hier konkret vorsehen, dass der Querschnitt der Prozesswasser-Zufuhrleitung in einem Bereich von maximal einem halben Meter vor der Mündung in den Wassereinlaufbereich eine solche Vergrößerung erfährt.

Auch hierdurch wird weiterhin unterstützt, dass Verwirbelungen des Prozesswassers im Wassereinlaufbereich reduziert werden, weil durch die Querschnittsvergrößerung bei dem vorgegebenen Volumenstrom die Fließgeschwindigkeit des Prozesswassers im Mündungsbereich verringert wird. Hierdurch wird insbesondere sichergestellt, dass bereits auf der Vliesfilterbahn abgelagerte Schmutzansammlungen nicht durch das zulaufende Prozesswasser erneut aufgewirbelt werden.

Insbesondere kann die Wasserführung auch vorsehen, dass das unterhalb der Prozesswasseroberfläche im Filterbecken in den Wassereinlaufbereich einfließende verschmutzte Prozesswasser durch eine Leitvorrichtung, wie zum Beispiel ein oder mehrere Leitbleche in die Richtung nach oben, also von der Vliesfilterbahn weg weisend umgelenkt wird.

In einer Weiterbildung kann es vorgesehen sein, dass die Prozesswasser-Zufuhrleitung in einem Bereich vor der Mündung in den Wassereinlaufbereich einen Entlüftungsbereich aufweist.

Hierdurch wird sichergestellt, dass in der Prozesswasser-Zufuhrleitung mitgeführte Luftblasen an einem Eintritt in den Wassereinlaufbereich des Filterbeckens gehindert werden, weil diese über den Entlüftungsbereich vor der Mündung das Prozesswasser verlassen.

Ein solcher Entlüftungsbereich kann zum Beispiel realisiert sein dadurch, dass vor dem Mündungsbereich, insbesondere in einem Abstandsbereich von 0-50 cm vor der Mündung in den Wassereinlaufbereich ein nach oben entlüftetes, insbesondere zur Umgebung offenes Steigrohr an der Prozesswasser-Zufuhrleitung angeordnet ist.

Das obere Ende eines solchen entlüfteten, insbesondere offenen Steigrohres liegt dabei bevorzugt über dem maximal erreichbaren Prozesswasserspiegel im Wassereinlaufbereich des Filterbeckens, sodass ein Wasseraustritt aus dem Steigrohr jederzeit sicher verhindert ist.

Wie eingangs beschrieben wurde, ist es ein wesentlicher Aspekt der Erfindung, dass die Höhe der Prozesswassersäule im Wassereinlaufbereich des Filterbeckens eine maximale Höhe nicht überschreitet, insbesondere zwischen einer minimalen und einer maximalen Höhe schwankt, insbesondere eingeregelt wird. Um dies zu erzielen sieht es die Erfindung bevorzugt vor, dass ein die Höhe des Prozesswassers repräsentierendes Maß mit einem oberhalb der Prozesswasseroberfläche angeordneten Sensor berührungslos gemessen wird.

Besonders durch die berührungslose Messung wird sichergestellt, dass der eingesetzte Sensor selbst nicht mit dem Prozesswasser in Berührung kommt und somit keiner Verschmutzung durch das Prozesswasser unterliegt, insbesondere somit der eingesetzte Sensor im Wesentlichen wartungsfrei und insbesondere mit gleichbleibenden Werten arbeiten kann. Eine Anhaftung von Schmutz an einem Sensor, die erfindungsgemäß verhindert werden kann, würde ansonsten das Meßverhalten verändern.

In beispielhafter Anwendung kann es hier vorgesehen sein, die Prozesswasserhöhe bzw. ein dieses repräsentierendes Maß mit einem Ultraschallsensor zu bestimmen, der die Laufzeit eines Ultraschallimpulses zwischen Aussendung und Empfang ermittelt, wobei zwischen Aussendung und Empfang eine Reflexion an der Prozesswasseroberfläche im Wassereinlaufbereich erfolgt.

Ebenso kann es vorgesehen sein, eine optische Lichtschranke einzusetzen, zum Beispiel in einer solchen Konstruktion, bei der ein Lichtsignal an der Wasseroberfläche reflektiert und insbesondere unter einem Winkel größer Null Grad zur Oberflächennormalen der Wasseroberfläche sensorisch empfangen wird.

Eine besonders bevorzugte Ausführung der Erfindung sieht es vor, dass die Höhe der Prozesswassersäule bestimmt, insbesondere geregelt wird in Abhängigkeit der Messwerte eines Luftdrucksensors, der am oberen Ende eines oben geschlossenen Rohres angeordnet ist, dass mit seinem unten offenen Ende unterhalb der Wasseroberfläche des Prozesswassers im Wassereinlaufbereich angeordnet ist, so dass zwischen diesem unteren Ende und innen am oberen Ende angeordneten Luftdrucksensor eine Luftsäule eingeschlossen ist.

Bei einem ansteigenden Prozesswasserspiegel im Wassereinlaufbereich wird der Wasserspiegel demnach auch in diesem oben geschlossenen Rohr ansteigen und die über dem Wasserspiegel im Rohr befindliche Luftsäule komprimieren, was zu einer Erhöhung des Luftdruckes im oberen Bereich des Rohres führt und dementsprechend erfindungsgemäß mit dem Luftdrucksensor detektiert wird.

Übersteigt demnach bei dieser Ausführung der gemessene Luftdruck einen vorbestimmten Grenzwert, so wird das eingangs beschriebene Förderband abhängig hiervon betrieben, z.B. um einen vorbestimmten Betrag weiter gefördert oder in der Geschwindigkeit geändert, so dass hierdurch die Vliesfilterbahn teilweise erneuert wird und dementsprechend der Wasserspiegel absinkt.

Die Erfindung kann hier vorsehen, den Antrieb des Förderbandes getaktet vorzunehmen in Abhängigkeit des zuvor genannten Meßwertes des Luftdrucksensors oder aber auch jeglicher anderer Meßvorrichtung zur Bestimmung der Prozesswasserhöhe, demnach also das Förderband zwischen Stillstand und der Weiterbewegung um eine vorbestimmte Weglänge intermittierend betrieben wird.

Die Erfindung kann es jedoch auch vorsehen, das Förderband mit einer vorbestimmten Normalgeschwindigkeit kontinuierlich zu bewegen und ausgehend von dieser Normalgeschwindigkeit eine Geschwindigkeitsreduzierung vorzunehmen, sofern durch einen Sensor der beispielsweise vorgenannten Arten ein Unterschreiten einer vorbestimmten Mindestprozesswasserhöhe detektiert wird bzw. ausgehend von dieser Normalgeschwindigkeit eine Geschwindigkeitserhöhung vorzunehmen, wenn das Überschreiten einer vorbestimmten Höchstprozesswasserhöhe detektiert wird. So kann ein fortlaufender Betrieb des Förderbandes sichergestellt werden, was zu einer Verschleißreduktion beiträgt.

Die Erfindung kann weiterhin auch vorsehen, dass dem Prozesswasser ein Zusatz, insbesondere ein chemisch oder physikalisch wirkender Zusatz zugegeben wird, mit dem eine Bindung von Schmutzpartikeln im Prozesswasser zu Partikelverbünden erzielt werden kann, so dass die gegenüber den Partikeln im Querschnitt vergrößerten Partikelverbünde leichter mit der eingesetzten Vliesfilterbahn ausfilterbar sind. Beispielsweise kann es vorgesehen sein, einen Zusatz einzusetzen, mit dem Kreide- oder Kaolin-Partikel gebunden werden können. So kann es die Erfindung vorsehen, dass die Art des eingesetzten Zusatzes oder die Menge eines eingesetzten Zusatzes ausgewählt wird in Abhängigkeit der Filterporengröße der eingesetzten Vliesfilterbahn.

Da Prozesswasser einer Druckmaschine üblicherweise temperiert, insbesondere gegenüber der Umgebungstemperatur am Einsatzort einer Druckmaschine mit einer niedrigeren Temperatur verwendet wird kann es die Erfindung weiterhin vorsehen, zum Zweck der Reduzierung einer Temperaturerhöhung in der Filtrationsanordnung die Filtrationsanordnung thermisch gegenüber der Umgebung zu isolieren.

Beispielsweise kann es hierfür vorgesehen sein, Wandbereiche des Filterbeckens, die das Prozesswasser gegenüber der Umgebung abgrenzen, mit einem Isolationsmaterial auszugestalten oder doppelwandig auszuführen und den Wandzwischenraum zu evakuieren oder mit einem Isolationsmaterial auszufüllen.

Die Erfindung auch allgemein in einer Weiterbildung vorsehen, dass im Auffangbereich der aus dem Filterbecken heraus transportierten mit Schmutz durchsättigten Vliesfilterbahn eine Wiegevorrichtung zum Wiegen des Gewichtes der verschmutzten Vliesfilterbahn vorgesehen ist.

So kann es beispielsweise vorgesehen sein in Abhängigkeit des festgestellten Gewichtes, insbesondere Flächengewichtes der verschmutzten Vliesfilterbahn oder des Gewichtes pro laufendem Meter bei einer vorgegebenen Vliesfilterbahnbreite Rückschlüsse zu ziehen auf die Menge des gebundenen Schmutzes, wonach Betriebsparameter der Filteranordnung, zum Beispiel die zu überwachende Höhe des Prozesswasserspiegel und/oder die Normalgeschwindigkeit der Vliesfilterbahn geändert wird. Des Weiteren sind Rückschlüsse auf den Filtrationsprozess und das Verhalten der eingesetzten Materialen (Papier, Farbe, etc.) möglich.

In einer möglichen weiteren Ausführung kann die verschmutzte Vliesfilterbahn, insbesondere vor der Zuführung in den Auffangbereich entwässert werden. So können die zu entsorgenden Abfälle und Verluste an Prozesswasser reduziert werden. Eine Entwässerung kann z.B. derart erfolgen, dass die Viiesfilterbahn zwischen zwei Walzen hindurchgeführt wird, wodurch das Prozesswasser aus der Vliesfilterbahn herausgequetscht wird, insbesondere hierbei in den Wassereinlaufbereich zurückgeführt wird.

Die Erfindung kann auch vorsehen, dass eine Messung des Vliesfilterbahnverbrauchs oder die Detektierung des Endes des Vliesfilterbahn-Vorrats erfolgt. Z.B. kann mittels eines Impulsgebers die Abwicklung von einer Vorratsrolle erfasst werden und nach Überschreitung einer vorgegebenen Impulszahl, bevorzugt bevor das tatsächliche Rollenende erreicht wird, eine Signalisierung erfolgen.

Gemäß einer Weiterbildung kann es vorgesehen sein, den Rückfluss des Prozesswassers mittels eines Durchflussmessgerätes zu messen.

Des Weiteren kann die Möglichkeit vorgesehen sein, eine Vielzahl von Messdaten auszuwerten und so Rückschlüsse auf den Druckprozess zu ziehen. Hier sind jeweils alleinig oder in Kombination beispielsweise Messdaten über folgende Kennzahlen möglich:
- Vliesvorschub (bzw. Verbrauch) je Stunde
- Vliesvorschub (bzw. Verbrauch) je Volumenstrom Prozesswasser
- Gewicht verschmutzte Vliesfilterbahn je Stunde
- Gewicht verschmutzte Vliesfilterbahn je Volumenstrom Prozesswasser
- Gewicht verschmutzte Vliesfilterbahn je Vliesvorschub (bzw. Verbrauch)

Sofern zusätzlich zu diesen aus der Erfindung abgeleiteten Kennzahlen noch die in der Druckmaschine verbrauchten Materialien wie Papier, Farbe, Feuchtmittel, etc. erfasst werden, können sehr aufschlussreiche Kennzahlen zur Beurteilung der Qualitäten der Einsatzstoffe ermittelt werden. Hier sind beispielsweise folgende Kennzahlen zu nennen:
- Ausschwemmverhalten Papier (Qualität Papier)
- Ausschwemmverhalten Farbe (Qualität Farbe)
- Filterverhalten Filtervlies (Qualität Vliesfiltermaterial)
- Wirksamkeit Feuchtmittel (Qualität Feuchtmittel)

Ein Ausführungsbeispiel einer erfindungsgemäßen Druckmaschinen-Filtrationsanordnung wird nachfolgend beschrieben. Die nachfolgend beschriebene Konstruktion bzw. Betriebsweise ist mit allen Ausführungen der vorgenannten allgemeinen Beschreibung kombinierbar.

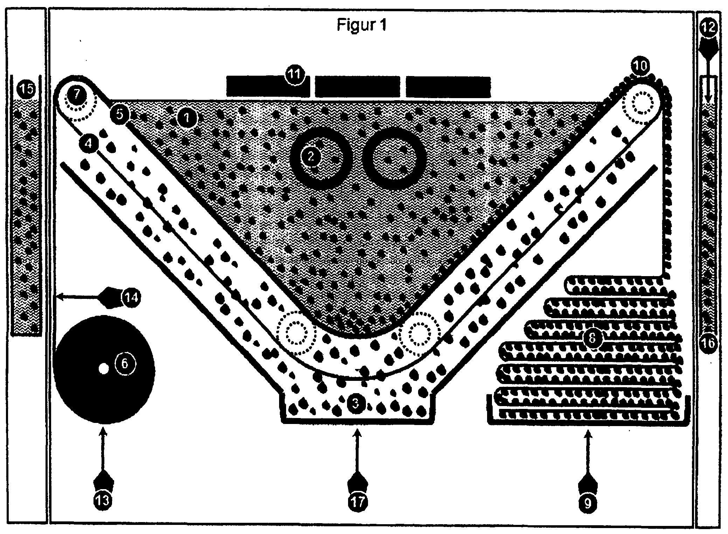

Die Figur 1 zeigt in der Gesamtansicht ein erfindungsgemäßes Filterbecken (1) welches in dem dargestellten Querschnitt V-förmig zueinander angeordnete Außenwandbereiche aufweist, die beispielsweise im Schnitt senkrecht zu der hier dargestellten Ansicht an senkrecht stehende nicht gezeigte Wandbereiche angrenzen, also solche die mit Bezug auf die Papierebene parallel liegen.

Erkennbar ist, dass entlang der Erstreckung der V-förmig zueinander unter einem Winkel von beispielsweise 90° stehenden Wandbereiche über Umlenkrollen (7) ein geschlossenes Förderband (4) motorisch betrieben wird. Dieses Förderband ist dabei zwischen den beiden oberen Umlenkrollen frei hängend betrieben und bildet deshalb eine zum Prozesswasser konkave wasserdurchlässige Schale aus.

Auf der Oberfläche des wasserdurchlässigen Förderbandes, insbesondere dessen obere Seite im Wesentlichen, abgesehen vom unteren Umkehrbereich parallel zu den V-förmige zueinander stehenden Wandbereichen orientiert ist liegt eine Vliesfilterbahn (5) auf, die von einer Vorratsrolle (6) über die Oberkante der linken Filterbeckenwand und eine Förderbandumlenkrolle (7) in das Filterbecken hinein geführt und über die Oberseite der rechten Filterbeckenwand (10) und eine Förderbandumlenkrolle aus diesem heraus geführt und einem Auffangbereich (8) zugeführt ist.

Da die Vliesfilterbahn abgesehen von einem eventuellen Notüberlauf (11) den einzigen Durchgangsbereich für das Prozesswasser zwischen einem In der Höhe oben liegenden Wassereinlaufbereich (2) und dem hier unten angeordneten Wasserauslaufbereich bildet steht auf der Vliesfilterbahn das Prozesswasser im Wassereinlaufbereich in der Höhe auf und wird durch den hydrostatischen Druck durch die Vliesfilterbahn hindurch transportiert und gelangt so zum Wasserauslauf (3), um in dem Prozesswasserkreislauf zurückgeführt zu werden.

Mit einem Sensor (12) wird die Prozesswasserhöhe im Wassereinlaufbereich überwacht und in Abhängigkeit von der detektierten Höhe ein motorischer Antrieb (7) des umlaufend geführten Förderbandes angetrieben. Hier ist der Sensor (12) am oberen geschlossenen Ende eines mit seinem unteren offenen Ende in das Prozesswasser eintauchenden Rohres angeordnet. Mit dem Sensor wird der Luftdruck der Luftsäule im Rohr über dem Prozesswasser gemessen, der mit steigender Prozesswassersäule zunimmt.

Da die Vliesfilterbahn weiterhin durch die Gewichtskraft des auf ihm stehenden Wassers auf die Oberfläche des wasserdurchlässigen Förderbandes aufgedrückt wird ergibt sich ein Kraft-und/oder Reibschluss zwischen der Unterseite der Vliesfilterbahn und der oberen Oberfläche des Förderbandes, sodass sich zum einen die Vliesfilterbahn exakt an die zum Wasser konkave Bahnkontur des Förderbandes anpasst und bei einer Bewegung des Förderbandes mit diesem mitgeführt wird ohne dass es eines mechanischen Eingriffes weiterer Art zwischen Vliesfilterbahn und Förderband bedarf.

Mittels einer Wiegevorrichtung (9), die z.B. unter dem Auffangbereich 8 angeordnet ist kann das Gewicht der aufgefangenen Vliesfilterbahn ermittelt und z.B. zu Steuerungs- oder Signalisierungszwecke genutzt werden.

## Patentansprüche

1. Druckmaschinen-Filtrationsanordnung umfassend ein Filterbecken (1), dem das Prozeßwasser einer Druckmaschine zugeführt ist, wobei das Filterbecken (1) in Höhenrichtung in einen oben liegenden Wassereinlaufbereich (2) und einen darunter liegenden Wasserauslaufbereich (3) unterteilt ist, wobei die beiden Bereiche (2, 3) durch eine auf einem wasserdurchlässigen, umlaufenden Förderband (4) getragene Vliesfilterbahn (5) getrennt sind, welche von einem Vliesfilter-Vorrat (6) mittels des Förderbandes (4) durch das Filterbecken (1) zu einem Auffangbereich (8) motorisch transportierbar ist und die Vliesfilterbahn (5) in Richtung auf das Förderband (4) durch die Gewichtskraft des auf der Vliesfilterbahn (5) aufstehenden Prozeßwassers kraftbeaufschlagt ist und das Prozeßwasser alleine durch den statischen Druck der auf der Vliesfilterbahn (5) aufstehenden Prozeßwassersäule durch die Vliesfilterbahn (5) transportiert wird und das Förderband (5) in Abhängigkeit der Höhe der Prozeßwassersäule angetrieben ist, wobei sie einen zum Prozeßwasser berührungslosen Sensor aufweist, mit dem ein die Höhe des Prozesswassers repräsentierendes Maß berührungslos messbar ist und in Abhängigkeit von dessen Meßwerten die Höhe der Prozeßwassersäule bestimmbar und regelbar ist, **dadurch gekennzeichnet, dass** sie unterhalb des Höhenniveaus des Prozeßwasserauslaufes einer Druckmaschine angeordnet ist und das Prozeßwasser von der Druckmaschine mittels einer Prozeßwasser-Zufuhrleitung dem Filterbecken (1) alleine durch Schwerkraftwirkung zugeführt ist.

2. Druckmaschinen-Filtrationsanordnung nach einem der vorherigen Ansprüche **dadurch gekennzeichnet, dass** eine von einer Druckmaschine kommende Prozeßwasser-Zufuhrleitung unterhalb des Prozeßwasserspiegels in den Wassereinlaufbereich des Filterbeckens (1) mündet.

3. Druckmaschinen-Filtrationsanordnung nach Anspruch 2, **dadurch gekennzeichnet, dass** der Mündungsquerschnitt der Prozeßwasser-Zufuhrleitung am Ort des Wassereinlaufbereiches vergrößert ist, insbesondere um mindestens den Faktor 2, gegenüber dem Querschnitt der Prozeßwasser-Zufuhrleitung in Strömungsrichtung davor.

4. Druckmaschinen-Filtrationsanordnung nach Anspruch 2 oder 3, **dadurch gekennzeichnet, dass** die Prozeßwasser-Zufuhrleitung in einem Bereich vor der Mündung in den Wassereinlaufbereich einen Entlüftungsbereich aufweist, insbesondere ausgebildet durch ein vor der Mündung angeordnetes nach oben entlüftetes Steigrohr, so dass das Prozeßwasser zumindest im Wesentlichen luftfrei in den Wassereinlaufbereich geleitet ist.

5. Druckmaschinen-Filtrationsanordnung nach einem der vorherigen Ansprüche, **dadurch gekennzeichnet, dass** der zum Prozeßwasser berührungslose Sensor ausgebildet ist als Luftdrucksensor (12), der am obere Ende eines oben geschlossenen Rohres angeordnet ist, das mit seinem unten offenen Ende unterhalb der Wasseroberfläche des Prozeßwassers im Wassereinlaufbereich angeordnet ist.

6. Verfahren zum Betrieb einer Druckmaschinen-Filtrationsanordnung, insbesondere nach einem der vorherigen Ansprüche, bei dem das Prozeßwasser einer Druckmaschine alleine durch die Wirkung der Schwerkraft einem Filterbecken (1) zugeführt wird, in welchem durch die Gewichtskraft des Prozeßwassers eine Vliesfilterbahn (5) kraftbeauschlagt wird, wodurch die Vliesfilterbahn (5) auf die Oberfläche eines im Filterbecken (1) umlaufend betriebenen Förderbandes (4) gedrückt wird und durch die in Abhängigkeit der Prozeßwasserhöhe über der Vliesfilterbahn (5) gesteuerte oder geregelte Bewegung des Förderbandes (4) im Kraft- und/oder Reibschluß mitgeführt wird, wobei eine Regelung der Höhe der Prozeßwassersäule erfolgt in Abhängigkeit der Messwerte eines oberhalb der Prozesswasseroberfläche angeordneten Sensors, mit dem ein die Höhe des Prozesswassers repräsentierendes Maß berührungslos gemessen wird.

7. Verfahren nach Anspruch 6, **dadurch gekennzeichnet, dass** dem Prozeßwasser ein Zusatz zugegeben wird, der zu einer Bindung von Partikeln im Prozeßwasser zu Partikelverbünden führt, die mit der eingesetzten Vliesfilterban ausfilterbar sind, insbesondere ohne Zusatz nicht usfilterbar wären.

## Claims

1. Printing machine filtration assembly comprising a filter tank (1), to which the process water from a printing machine is supplied, the filter tank (1) being subdivided in the vertical direction into an upper water inlet area (2) and a water outlet area (3) located underneath, the two areas (2, 3) being separated by a nonwoven filter strip (5) carried on a water-permeable, circulating conveyor belt (4), which filter strip can be transported by motor from a nonwoven filter supply (6) by means of the conveyor belt (4) through the filter tank (1) to a collecting area (8), and the nonwoven filter strip (5) having a force applied to it in the direction of the conveyor belt (4) by the weight of the process water standing on the nonwoven filter strip (5), and the process water being transported by the nonwoven filter strip (5) only by the static pressure of the process water column standing on the nonwoven filter strip (5), and the conveyor belt (5) being driven on the basis of the height of the process water column, it having a non-contact sensor for the process water, with which a measure representing the height of the process water can be measured without contact and, depending on the measured values from which, the height of the process water column can be determined and controlled, **characterized in that** it is arranged below the height level of the process water outlet from a printing machine, and the process water from the printing machine is supplied to the filter tank (1) by means of a process water feed line only by the action of gravity.

2. Printing machine filtration assembly according to one of the preceding claims, **characterized in that** a process water feed line coming from a printing machine opens into the water inlet area of the filter tank (1) below the process water level.

3. Printing machine filtration assembly according to Claim 2, **characterized in that** the opening cross section of the process water feed line is enlarged at the location of the water inlet area, in particular by at least the factor 2, with respect to the cross section of the process water feed line upstream thereof in the flow direction.

4. Printing machine filtration assembly according to Claim 2 or 3, **characterized in that** the process water feed line in an area before the opening into the water inlet area has a de-aeration area, in particular formed by a riser pipe vented at the top and arranged before the opening, so that the process water is led into the water inlet area at least in a substantially air-free manner.

5. Printing machine filtration assembly according to one of the preceding claims, **characterized in that** the non-contact sensor for the process water is formed as an air pressure sensor (12), which is arranged at the upper end of a pipe closed at the top, which pipe is arranged with its end open at the bottom below the water surface of the process water in the water inlet area.

6. Method for operating a printing machine filtration assembly, in particular according to one of the preceding claims, in which method the process water from a printing machine is supplied only by the action of gravity to a filter tank (1), in which force is applied to a non-woven filter strip (5) by the weight of the process water, by which means the nonwoven filter strip (5) is pressed onto the surface of a conveyor belt (4) driven in circulation in the filter tank (1), and by which the movement of the conveyor belt (4), controlled or regulated on the basis of the process water height above the nonwoven filter strip (5), is carried along with a force and/or frictional connection, regulation of the height of the process water column being carried out on the basis of the measured values from a sensor arranged above the process water surface, with which a measure representing the height of the process water is measured without contact.

7. Method according to Claim 6, **characterized in that** an additive is added to the process water, which leads to binding of particles in the process water to form particle agglomerates which can be filtered out with the nonwoven filter strip used but in particular could not be filtered out without additive.

## Revendications

1. Système de filtration de presses comprenant un bassin de filtre (1), auquel l'eau de traitement d'une presse est envoyée, dans lequel le bassin de filtre (1) est divisé dans le sens de la hauteur en une zone d'entrée d'eau (2) située en haut et une zone de sortie d'eau (3) située en dessous de celle-ci, dans lequel les deux zones (2, 3) sont séparées par une bande de filtre non tissé (5) portée sur une bande transporteuse (4) circulante perméable à l'eau, laquelle peut être transportée de façon motorisée depuis une réserve de filtre non tissé (6) au moyen de la bande transporteuse (4) à travers le bassin de filtre (1) jusqu'à une zone de reprise (8) et la bande de filtre non tissé (5) est soumise à une force en direction de la bande transporteuse (4) en raison du poids de l'eau de traitement se trouvant sur la bande de filtre non tissé (5) et l'eau de traitement est transportée à travers la bande de filtre non tissé (5) uniquement par la pression statique de la colonne d'eau de traitement se trouvant sur la bande de filtre non tissé (5) et la bande transporteuse (5) est entraînée en fonction de la hauteur de la colonne d'eau de traitement, dans lequel il présente un capteur sans contact avec l'eau de traitement, avec lequel une grandeur représentant la hauteur de l'eau de traitement peut être mesurée sans contact et la hauteur de la colonne d'eau de traitement peut être déterminée et réglée en fonction des valeurs de mesure de celui-ci, **caractérisé en ce qu'**il est disposé en dessous du niveau en hauteur de la sortie d'eau de traitement d'une presse et l'eau de traitement de la presse est envoyée au bassin de filtre (1) uniquement par l'action de la force de gravité au moyen d'une conduite d'arrivée d'eau de traitement.

2. Système de filtration de presses selon l'une quelconque des revendications précédentes, **caractérisé en ce qu'**une conduite d'arrivée d'eau de traitement venant d'une presse débouche dans la zone d'entrée d'eau du bassin de filtre (1) en dessous du niveau d'eau de traitement.

3. Système de filtration de presses selon la revendication 2, **caractérisé en ce que** la section transversale de l'embouchure de la conduite d'arrivée d'eau de traitement à l'endroit de la zone d'entrée d'eau est agrandie, en particulier d'au moins un facteur 2, par rapport à la section transversale de la conduite d'arrivée d'eau de traitement avant celle-ci dans le sens de l'écoulement.

4. Système de filtration de presses selon la revendication 2 ou 3, **caractérisé en ce que** la conduite d'arrivée d'eau de traitement présente une zone de désaération dans une région située avant l'embouchure dans la zone d'entrée d'eau, en particulier formée par un tube montant disposé avant l'embouchure et désaéré vers le haut, de telle manière que l'eau de traitement soit conduite dans la zone d'entrée d'eau au moins essentiellement sans air.

5. Système de filtration de presses selon l'une quelconque des revendications précédentes, **caractérisé en ce que** le capteur sans contact avec l'eau de traitement est réalisé sous la forme d'un détecteur de pression d'air (12), qui est disposé à l'extrémité supérieure d'un tube fermé vers le haut, qui est disposé avec son extrémité inférieure ouverte en dessous de la surface d'eau de l'eau de traitement dans la zone d'entrée d'eau.

6. Procédé d'utilisation d'un système de filtration de presses, en particulier selon l'une quelconque des revendications précédentes, dans lequel on envoie l'eau de traitement d'une presse uniquement par l'action de la force de gravité à un bassin de filtre (1), dans lequel une bande de filtre non tissé (5) est soumise à une force par le poids de l'eau de traitement, la bande de filtre non tissé (5) étant ainsi pressée sur la surface d'une bande transporteuse entraînée en circulation (4) dans le bassin de filtre (1) et étant entraînée par adhérence et/ou par friction par le mouvement de la bande transporteuse (4) commandé ou régulé en fonction de la hauteur de l'eau de traitement au-dessus de la bande de filtre non tissé (5), dans lequel on effectue une régulation de la hauteur de la colonne d'eau de traitement en fonction des valeurs de mesure d'un capteur disposé au-dessus de la surface de l'eau de traitement, avec lequel on mesure sans contact une grandeur représentant la hauteur de l'eau de traitement.

7. Procédé selon la revendication 6, **caractérisé en ce que** l'on ajoute à l'eau de traitement un additif, qui conduit à une liaison de particules dans l'eau de traitement pour former des composites de particules, qui peuvent être filtrés avec la bande de filtre non tissé utilisée, en particulier qui ne pourraient pas être filtrés sans additif.
